Europäisches Patentamt

European Patent Office

Office européen des brevets

(11) Publication number: **0 141 533**
**B1**

(12) **EUROPEAN PATENT SPECIFICATION**

(45) Date of publication of patent specification: **12.09.90**

(51) Int. Cl.⁵: **B 01 D 1/16, B 01 D 19/00, C 10 M 175/00, B 05 B 3/10**

(21) Application number: **84306695.2**

(22) Date of filing: **01.10.84**

(54) **Fluid purifier.**

(30) Priority: **03.10.83 US 538229**

(43) Date of publication of application:
**15.05.85 Bulletin 85/20**

(45) Publication of the grant of the patent:
**12.09.90 Bulletin 90/37**

(84) Designated Contracting States:
**AT BE DE IT NL SE**

(56) References cited:
**DE-A-2 259 740**
**DE-C- 345 805**
**FR-A- 581 442**
**GB-A-2 061 755**
**US-A-2 258 445**

(73) Proprietor: **PALL CORPORATION**
**30 Sea Cliff Avenue**
**Glen Cove New York 11542 (US)**

(72) Inventor: **Koslow, Evan Ernest**
**5 Town Crier Lane**
**Westport Connecticut 06880 (US)**

(74) Representative: **Corin, Christopher John et al**
**Mathisen Macara & Co. The Coach House 6-8**
**Swakeleys Road**
**Ickenham Uxbridge UB10 8BZ (GB)**

Courier Press, Leamington Spa, England.

# EP 0 141 533 B1

## Description

The present invention relates to a device for separating a fraction of a volatile contaminant from a contaminated liquid. The invention also relates to a method and to a system for purifying a contaminated liquid.

Liquids frequently become contaminated during use and must be purified before they can be recycled. For example, lubricants, hydraulic fluids, transformer oils, and cutting fluids often become contaminated with water, cleaning solvents, or other volatile contaminants which must be separated from the liquids before the liquids can be reused.

Liquid purifiers (sometimes referred to as "fluid purifiers") have been previously based on the use of heat or vacuum or both to separate a volatile contaminant from a liquid. One problem with previous liquid purifiers is to provide sufficient purification in a single pass through the purifier without harming the liquid itself. Purifiers with harsh processing conditions, such as excessive heat or excessive vacuum, may provide sufficient purification in a single pass, but they often have destructive effects on the liquid being purified. For example, the liquid can be seriously altered through the loss of low boiling point components, removal of additives, or oxidation or charring of the liquid.

Purifiers with milder processing conditions, such as lower temperature or lower vacuum, may not harm the liquid being purified, but they often provide only partial purification in a single pass. The liquid must be pumped through the purifier many times for sufficient purification. This multi-pass approach substantially increases the amount of energy and time needed to purify the contaminated liquid.

One problem of previous purifiers based on the use of a vacuum is producing a large enough surface area for a given volume of liquid to allow sufficient release of the contaminant. There is less resistance to the release of volatile contaminants at or near the surface of the liquid than within the body of the liquid. Insufficient surface area results in only partial purification, again making it necessary to pump the liquid through the purifier many times before the liquid is sufficiently purified.

Another problem with previous vacuum purifiers is that their performance varies substantially with the viscosity of the contaminated liquid. These purifiers usually use some medium, such as a downward flow column, to form a thin film of the contaminated liquid which increases the surface area of the liquid. If the liquid is viscous, however, it forms a thick film. The release of volatile contaminants from the body of the thick film is a much slower process which increases the time required to purify the liquid.

Specific problems to be overcome include providing a liquid purifier: (1) that sufficiently purifies the liquid in a single pass through the purifier without significantly deteriorating or altering the liquid itself; (2) that produces a large surface area for a given volume of liquid; (3) that provides essentially constant performance regardless of viscosity; and (4) that require a minimum amount of energy and time to purify the liquid.

It has already been proposed in DE-B 2259740 to provide a device for separating a fraction of a volatile contaminant from a contaminated liquid, the device comprising a vacuum chamber, a rotary plate having a continuous surface and disposed within the chamber, means for introducing the liquid on to a surface of the plate, means spaced from the plate for coalescing the purified liquid, means for rotating the plate at a rotational velocity such that the liquid is detached from the periphery of the rotating plate in the form of fine droplets, the means for introducing the contaminated liquid to the plate serving to introduce the liquid substantially at the rotational axis of the plate.

This prior proposal enables the provision of a device for separating a fraction of a volatile contaminant from a contaminated liquid, the device comprising a vacuum chamber, a rotary plate having a continuous surface and disposed within the chamber, means for introducing the liquid on to a surface of the plate, means spaced from the plate for coalescing the purified liquid, the means for introducing the contaminated liquid on to the plate serving to introduce the liquid substantially at the rotational axis of the plate.

These problems are solved by the provision of a device as set out in the immediately preceding paragraph which is characterized in that the device further comprises means for rotating the plate at a rotational velocity such that the liquid is detached from the periphery of the rotating plate in the form of fine droplets having diameters distributed about a theoretical droplet diameter of about 40 micrometers or less according to the formula:

$$d = \frac{K}{V(D\rho/T)^{1/2}}$$

where d equals the theoretical droplet diameter, V equals the plate rotational velocity, D equals the plate diameter, $\rho$ equals the fluid density, T equals the fluid surface tension, and K is an empirical constant approximately equal to 0.075 when all of the variables are expressed in SI units, and the distance between the peripheral edge of the plate and the coalescing means provides a sufficient droplet residence time in the intervening space to permit the fraction of the volatile contaminant to be separated from the liquid as each droplet travels between the edge of the plate and the coalescing means.

Further according to the present invention there is provided a method for separating a fraction of a volatile contaminant from a contaminated liquid, said method comprising the steps of providing an at least

2

partially evacuated space and introducing the contaminated liquid on to the surface of the rotating plate, characterized in that the rotational speed of the plate is sufficient to break down the contaminated liquid as it leaves the periphery of the plate into fine droplets having diameters distributed about a theoretical droplet diameter of 40 micrometers or less according to the formula:

$$d = \frac{K}{V(D\rho/T)^{1/2}}$$

where d equals the theoretical droplet diameter, V equals the plate rotational velocity, D equals the plate diameter, ρ equals the fluid density, T equals the fluid surface tension, and K is an empirical constant approximately equal to 0.075 when all of the variables are expressed in SI units, and coalescing the fine droplets against a surface disposed within the space, the edge of the rotating plate being spaced a distance from the coalescing surface sufficient to yield a droplet residence time within the space that permits the fraction of the volatile contaminant to be separated from the contaminated liquid as each droplet travels between the edge of the rotating plate and the coalescing surface, and collecting the purified liquid received from the coalescing surface.

The present invention achieves each of the objects stated above. Further, it provides a purifier that purifies a wide spectrum of liquids. This purifier is small and lightweight yet has a large purifying capacity and operates with a high degree of reliability.

The invention will now be described, by way of example, with reference to the accompanying diagrammatic drawings, in which:

Fig. 1 is a part-sectional perspective view of a liquid purifier device embodying the present invention;

Fig. 2 is a partial elevation view of a plate assembly of the liquid purifier device of Fig. 1;

Fig. 3 is a sectional elevation view, to an enlarged scale, of the centre portion of one of the discs in the plate assembly of Fig. 2; and

Fig. 4 is a block diagram of a liquid-purifying system incorporating the purifier device of Fig. 1.

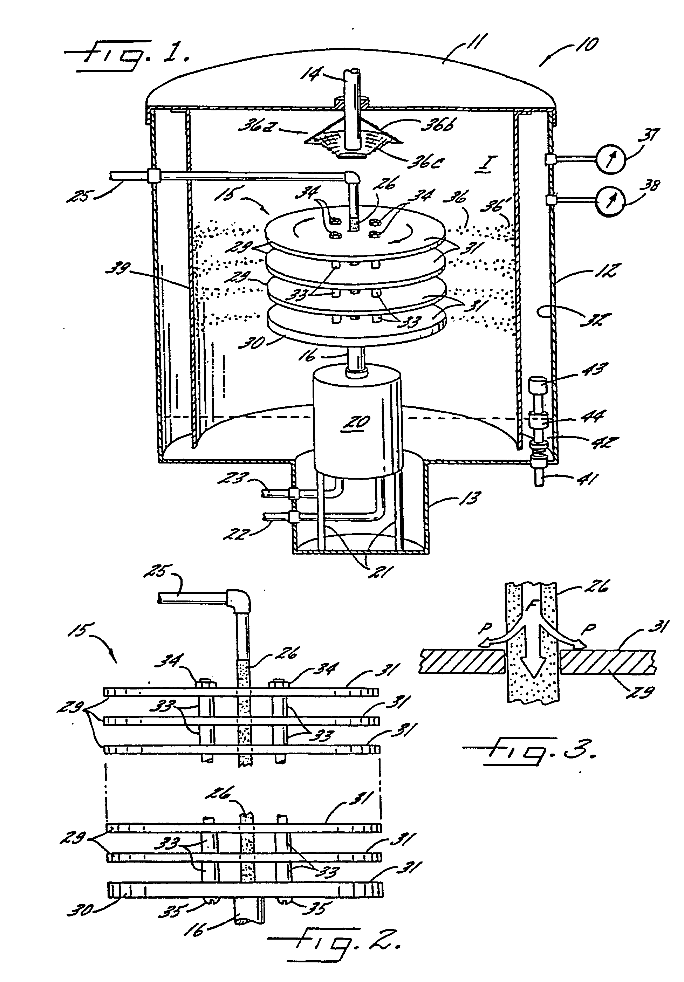

As shown in Fig. 1, the liquid purifier 10 comprises a vacuum chamber 11 which includes a casting 12 and a well 13. The vacuum chamber 11 defines an evacuated space I. A vacuum pump (not shown in Fig. 1), which communicates with the vacuum chamber 11 via an exhaust port 14, establishes and maintains the vacuum.

Within the casing 12, a plate assembly 15 is mounted for rotation by the drive shaft 16 of a hydraulic motor 20. The hydraulic motor 20 is mounted on supports 21 which, in turn, are mounted on the vacuum chamber 11 at the well 13.

Alternatively, the plate assembly 15 could be rotated by an electric or pneumatic motor disposed either inside or outside the vacuum chamber 11. A hydraulic motor 20 disposed within the vacuum chamber 11 is particularly advantageous, however, because no vacuum-tight seal at a rotating shaft is required and because the hydraulic motor 20 is highly reliable and efficient.

In operation, a suitable hydraulic liquid is pumped into a feed port 22 by a feed pump (not shown in Fig. 1), driving the hydraulic motor 20 through a port 23. The contaminated liquid enters the casing 12 through an inlet port 25, where it is fed to the rotating plate assembly 15 by a flow distributor 26. In one embodiment of the invention, the contaminated liquid serves as the hydraulic liquid, i.e., the contaminated liquid is first pumped into the hydraulic motor 20 via the feed port 22 and, upon exiting through the port 23, is fed directly into the casing 12 through the inlet port 25. In this embodiment, the speed of rotation of the plate assembly 15 is governed by the feed pump, and the motor speed is matched to the feed rate to provide a constant level of performance. A speed of approximately 6150 rpm should give satisfactory results.

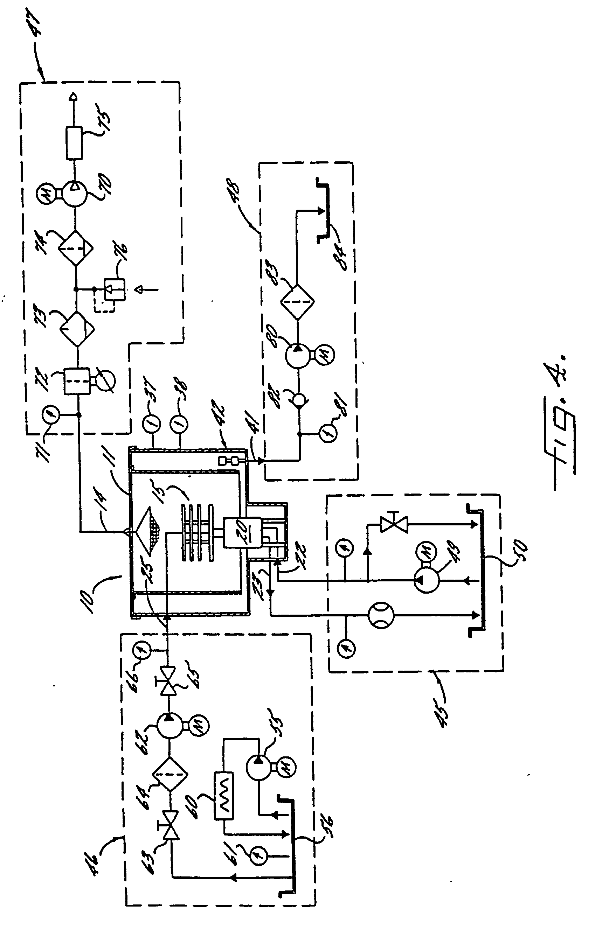

As shown in Fig. 2, the plate assembly 15 comprises a stack of discs 29 supported by a plate 30 which is mounted on the drive shaft 16. For example, the stack may comprise as many as twenty-four or more discs 29 supported by a single plate 30. A single disc only may be provided in addition to the plate 30. The discs 29 and the plate 30 may be fashioned from any of a variety of materials, provided the materials can withstand the rotational speeds contemplated. Nylon and aluminium are examples of materials which might be used. The discs 29 are stacked one on another with their centres aligned, the line formed by their centres being perpendicular to the top surfaces 31 of the discs 29, and the top surface 31 of each disc 29 defines a plane which intersects the wall 32 of the vacuum chamber 11. The discs 29 are separated from one another and from the plate 30 by hollow spacers 33. The plate assembly 15 is secured together by nuts 34 and bolts 35 running through the discs 29, the plate 30 and the hollow spacers 33. The flow distributor 26 extends through the centre of each disc 29 aligned with the drive shaft 16 and with an imaginary line passing through and perpendicular to each disc.

As shown in Fig. 3, at each disc 29, a portion P of the flow F of contaminated liquid feeds through the flow distributor 26 and on to the top surface 31 of each disc 29. The flow may also be directed on the undersurface of each disc. The flow distributor 26 may, for example, comprise a rod-like or tubular member formed of a porous material. Alternatively, a tube may be used having apertures graded in number and/or size so that approximately the same amount of liquid is delivered to each disc and the plate. In systems where the contaminated fluid is filtered through a relatively fine pre-filter (e.g., of the order of 10-20 micrometers), a relatively coarse material may be employed for the flow distributor 26. Specifically, a porous material having a 30-plus Tyler mesh should provide satisfactory results. Due to the centrifugal effects of each rotating disc 29, contaminated liquid which feeds on to the surface 31 of a disc 29 migrates to the edge of the disc 29 and is then sprayed outwardly in the form of very small droplets 36, as shown in Fig. 1. In other words the liquid is atomized. The energy required to produce the droplets 36 is fixed at a low value, approximately that required to rotate the free-spinning plate assembly 15.

Generally, the size of each droplet 36 emitted from the edge of each disc 29 (and the plate 30) will lie within a range distributed about a theoretical size which can be determined from the following equation.

$$d = \frac{K}{V(D\rho/T)^{1/2}}$$

where d equals the theoretical droplet diameter, V equals the disc rotational velocity, D equals the disc diameter, $\rho$ equals the fluid density, T equals the liquid surface tension and K is an empirical constant approximately equal to 4.5 when the other variables are expressed in cgs units and V is in rpm. For example, if a liquid having a density of one gram per cubic centimeter and a surface tension of ten dynes per centimeter is introduced onto the surface of an 8-inch (i.e., 20-centimeter) disc rotating at 6150 rpm, droplets emitted from the edge of the disc are expected to have diameters distributed about a theoretical droplet diameter of approximately five micrometers.

As seen from the above equation, the size of each droplet 36 generated by each rotating disc 29, and therefore·the surface area of the droplet 36, is largely independent of fluid viscosity, which can vary from liquid to liquid by several orders of magnitude. Rather, the droplet size depends on liquid density and surface tension, which are normally within a narrow band of values. Thus, a wide spectrum of liquids may be dispersed in the form of very small droplets, and while the performance of the purifier 10 may vary with viscosity of the liquid being processed, the range of performance is expected to be relatively limited and remain high even for relatively viscous fluids. Generally, purifiers 10 embodying the present invention are constructed and operated so they define a theoretical droplet diameter of about 40 micrometers or less and preferably within the range from about 20 micrometers to about 2.5 micrometers. It is expected that the diameters of droplets actually generated will be distributed about the theoretical droplet diameter.

The generation of droplets will deviate from that described above when the rate that the contaminated liquid is supplied to each disc 29 exceeds a certain limit. This limiting flow rate for each disc 29 has been found to be:

$$Q(max) = 4\pi^2R^2Vd = \frac{4\pi^2RK}{(2R\rho/T)^{1/2}}$$

where R equals the disc radius and d equals the droplet diameter as given above. In general, the preferred flow rate is maintained at 10% to 25% of Q(max).

As the droplets 36 of contaminated liquid are formed and discharged from the edge of the rotating disc 29 toward the chamber wall 32, the volatile contaminant is released from each droplet 36 into the evacuated space I, leaving behind a purified droplet 36'. Generally, the majority of the resistance to the release of the volatile contaminant from the contaminated liquid occurs within the volume of the liquid. However, the very small droplets 36 generated by the rotating disc 29 have very large surface area-to-volume ratios. Consequently, the diffusion distance within the droplet 36 is very small and the resistance to release is minimized. The volatile contaminants flash from the droplet 36 very rapidly and thoroughly, necessitating a very short residence time for the droplet 36 to attain a substantial degree of purification and thereby allowing liquids to be purified in a single pass. For example, for a five micrometer droplet 36 discharged from the disc 29 at a velocity of about 6400 centimeters per second (i.e., the linear velocity at the edge of the above suggested 8-inch (i.e., 20-centimeter) disc rotating at 6150 rpm) in a vacuum chamber 11 having an inside diameter of about 60 centimeters, the resulting residence time of approximately four milliseconds is sufficient to allow a high degree of purification. This short residence time, coupled with small disc size, makes possible a small, compact design for the purifier 10, e.g., a purifier only 60 cm in diameter.

To facilitate the release of the contaminant, the purifier 10 operates at a high vacuum, but the liquid may be maintained at a temperature only slightly higher than the ambient temperature. For example, a vacuum of approximately 22 inches (i.e., 55 centimeters) of mercury and a contaminated liquid temperature of approximately 130 degrees F (i.e., 55 degrees C) is expected to provide very satisfactory results. Chamber vacuum and temperature gauges 37, 38 monitor the vacuum and temperature, respectively. The high vacuum does not significantly deteriorate or alter the liquid itself because of the short residence time of the liquid within the purifier 10. Single-pass purification and the use of little heat reduce the amount of energy required to purify the liquid.

After the volatile contaminant has been released from the droplet 36, the vapourized contaminant is drawn from the vacuum chamber 11 through the exhaust port 14 by the vacuum pump (not shown in Fig.

4

1). An oil mist baffle assembly 36a comprising a hood 36b and a screen 36c covers the exhaust port 14. As the vapourized contaminant, or any other gas within the vacuum chamber 11, is withdrawn through the exhaust port 14, the screen 36c filters any oil mist from the gas. A 60 Tyler mesh screen should provide satisfactory results.

The purified droplets 36' impact a removable sleeve 39 disposed between the plate assembly 15 and the chamber wall 32. Since the removable sleeve 39 reduces the effective inside diameter of the vacuum chamber 11, it reduces the residence time of the droplets 36, 36'. A series of removable sleeves having progressively larger diameters may be provided which allow progressively larger residence times up to a maximum residence time defined by the chamber wall 32.

Upon impact, the purified droplets 36' coalesce as a purified liquid. Since the droplets 36' have a large surface tension relative to their available kinetic energy, they coalesce against the removable sleeve 39 rather than shatter to create a secondary aerosol. The purified liquid drains down the removable sleeve 39 and collects in the lower portion of the vacuum chamber 11. The purified liquid is drained from the vacuum chamber 11 through a drain port 41 by means of a return pump (not shown in Fig. 1) which is controlled by a level switch 42 located at the bottom of the casing 12. The level switch 42 comprises a high-level indicator 43 that activates the return pump and a low-level indicator 44 that deactivates the return pump. The length of time the liquid is within the vacuum chamber 11 is short. This short residence time, coupled with single-pass purification, results in a substantially reduced purification time and increased capacity.

The purifier 10 of Fig. 1 can be readily incorporated in an integrated liquid purifying system that removes particulates as well as volatile contaminants. As shown in Fig. 4, the liquid-purifying system comprises a hydraulic fluid drive system 45, a contaminated liquid feed system 46, a vacuum maintenance system 47, and a purified liquid removal system 48 in addition to the liquid purifier 10. The hydraulic motor 20 of this embodiment of the purifier 10 is driven by a separate hydraulic liquid supplied by the hydraulic liquid drive system 45. A hydraulic liquid feed pump 49 circulates the hydraulic liquid between a hydraulic liquid reservoir 50 and the hydraulic motor 20 with the hydraulic liquid entering the liquid purifier at the feed port 22 and exiting at the liquid port 23.

The contaminated liquid is warmed and fed to the purifier 10 by the contaminated liquid feed system 46. A circulation pump 55 circulates the contaminated liquid between a contaminated liquid reservoir 56 and a heater 60 which maintains the contaminated liquid at a temperature only slightly above the ambient temperature, as monitored by a reservoir temperature gauge 61. The contaminated liquid is drawn from the contaminated liquid reservoir 56 to the purifier 10 by the vacuum in the purifier 10 or by an optional feed pump 62. En route, the contaminated liquid passes through a ball valve 63 and an initial particulate filter 64 which removes most of the initial particulate filter 64, the contaminated liquid is drawn through a needle valve 65, past an inlet temperature gauge 66, and into the purifier 10 through the feed port 25, where the volatile contaminant is separated from the contaminated liquid as previously described.

The vacuum maintenance system 47 removes the vapourized volatile contaminant from the purifier 10 in addition to maintaining the vacuum. A vacuum pump 70 draws the gases in the purifier 10, including the port 14, past a gas outlet temperature gauge 71, and through a gas-flow orifice plate 72 which monitors the gas-flow. Since this gas may also contain droplets of the liquid being purified, the gas is also drawn through an oil trap 73 and a coalescing filter 74 before being exhausted through a silencer 75. A vacuum relief valve 76 permits relief of the vacuum if, for example, access within the purifier 10 is desired.

The purified liquid removal system 48 includes a return pump 80 which is controlled by the level switch 42 in the purifier 10. When activated, the return pump 80 pumps the purified liquid from the purifier 10 through the drain port 41, past a discharge fluid temperature gauge 81, and through a check valve 82 which prevents back flow into the purifier 10. From the check valve 82, the purified liquid is pumped through a final particulate filter 83 and into a purified liquid reservoir 84.

**Claims**

1. A device for separating a fraction of a volatile contaminant from a contaminated liquid, the device comprising a vacuum chamber (10), a rotary plate (30) having a continuous surface and disposed within the chamber (10), means (25) for introducing the liquid on to a surface (31) of the plate, means (39) spaced from the plate for coalescing the purified liquid, the means (25) for introducing the contaminated liquid on to the plate (30) serving to introduce the liquid substantially at the rotational axis of the plate, characterized in that the device further comprises means (20) for rotating the plate (30) at a rotational velocity such that the liquid is detached from the periphery of the rotating plate in the form of fine droplets having diameters distributed about a theoretical droplet diameter of about 40 micrometers or less according to the formula:

$$d = \frac{K}{V(D\rho/T)^{1/2}}$$

where d equals the theoretical droplet diameter, V equals the plate rotational velocity, D equals the plate diameter, $\rho$ equals the fluid density, T equals the fluid surface tension, and K is an empirical constant approximately equal to 0.075 when all of the variables are expressed in SI units, and the distance between the peripheral edge of the plate and the coalescing means (39) provides a sufficient droplet residence time in the intervening space to permit the fraction of the volatile contaminant to be separated from the liquid as each droplet travels between the edge of the plate and the coalescing means.

2. A device according to claim 1, characterized by a stack of discs (29) spaced from one another and mounted above said plate (30), the centres of the discs lying on a line perpendicular to the surface of each disc, the introducing means (25) serving additionally for depositing the liquid on at least one surface (31) of each disc.

3. A device according to claim 1 or claim 2 characterized by means for changing the distance between the edge of the plate (30) and the coalescing means (39), such means comprising removable sleeves of various diameters.

4. A device according to any one of claims 1 to 3, characterized by means (42) disposed within the chamber (10) for collecting the purified liquid from the coalescing means (39), means (48) communicating with the collecting means for removing the purified liquid from the chamber (10), and means (47) communicating with the chamber for drawing the released contaminant from the vacuum chamber.

5. A device according to any one of the preceding claims characterized in that the plate rotating means is a hydraulic motor (20) mounted within the chamber (10).

6. A device according to claim 5, characterized in that said hydraulic motor (20) is connected to the flow of the contaminated fluid upstream of the introducing means (25, 26).

7. A device according to any one of claims 1 to 6 characterized in that means are provided for moving the liquid through the device, an initial filter (64) removing at least a portion of the particulates from the contaminated liquid, said vacuum chamber being located downstream from the filter (64) and having an internal surface (39) forming said coalescing means, means (42) being provided for collecting the purified liquid received from the coalescing surface (39), means (41, 48) being provided for removing the purified liquid from the chamber (10), and exhaust means (14, 47) being provided for venting the released volatile contaminant from the vacuum chamber (10) and including a coalescing filter (74) in communication with the exhaust means.

8. A device according to claim 7, characterized in that the removing means (41, 48) includes a final filter (83) for removing further particulates.

9. A device according to claim 7 or claim 8, characterized by means (6) for heating the contaminated fluid.

10. A method for separating a fraction of a volatile contaminant from a contaminated liquid, said method comprising the steps of providing an at least partially evacuated space (I), rotating a plate (30) disposed within the space (I) and introducing the contaminated liquid on to the surface (31) of the rotating plate (30), characterized in that the rotational speed of the plate (30) is sufficient to break down the contaminated liquid as it leaves the periphery of the plate into fine droplets (36) having diameters distributed about a theoretical droplet diameter of 40 micrometers or less according to the formula:

$$d = \frac{K}{V(D\rho/T)^{1/2}}$$

where d equals the theoretical droplet diameter, V equals the plate rotational velocity, D equals the plate diameter, ρ equals the fluid density, T equals the fluid surface tension, and K is an empirical constant approximately equal to 0.075 when all of the variables are expressed in SI units, and coalescing the fine droplets against a surface (30) disposed within the space (I), the edge of the rotating plate (30) being spaced a distance from the coalescing surface sufficient to yield a droplet residence time within the space (I) that permits the fraction of the volatile contaminant to be separated from the contaminated liquid as each droplet travels between the edge of the rotating plate and the coalescing surface, and collecting the purified liquid received from the coalescing surface.

**Patentansprüche**

1. Vorrichtung zum Abtrennen einer Fraktion einer flüchtigen Verunreinigung von einer verunreinigten Flüssigkeit, welche Vorrichtung eine Vakuumkammer (10), eine rotierende Platte (30), welche eine durchgehende Oberfläche hat und in der Kammer (10) angeordnet ist, Mittel (25) zum Einleiten der Flüssigkeit auf eine Oberfläche (31) der Platte, und im Abstand von der Platte angeordnete Mittel (39) zum Vereinen der gereinigten Flüssigkeit aufweist, wobei die Mittel (25) zum Einleiten der verunreinigten Flüssigkeit auf die Platte (30) dazu dienen, die Flüssigkeit im wesentlichen an der Rotationsachse der Platte einzuleiten, dadurch gekennzeichnet, daß die Vorrichtung weiter Mittel (20) enthält, um die Platte (30) mit einer Rotationsgeschwindigkeit in Drehung zu versetzen, bei der die Flüssigkeit vom Umfang der rotierenden Platte in Form von feinen Tröpfchen zur Ablösung gebracht wird, deren Durchmesser um einen theoretischen Tröpfchendurchmesser von ungefähr 40 µm oder weniger entsprechend der Beziehung:

$$d = \frac{K}{V(D\rho/T)^{1/2}}$$

verteilt ist, in welcher Beziehung d der theoretische Tröpfchendurchmesser, V die Rotationsgeschwindigkeit der Platte, D der Plattendurchmesser, ρ die Dichte des Fluides, T die Oberflächenspannung des Fluides und K eine empirische Konstante ist, deren Wert annähernd gleich 0,075 ist, wenn alle Variablen in SI-Einheiten ausgedrückt sind, und daß der Abstand zwischen dem Umfangsrand der Platte und den Vereinigungsmitteln (39) eine hinreichende Tröpfchenverweilzeit im Zwischenraum ergibt, um eine Abtrennung der von der Flüssigkeit abzutrennenden Fraktion der flüchtigen Verunreinigung während jedes Tröpfchen zwischen dem Rand der Platte und den Sammelmitteln wandert, zu ermöglichen.

2. Vorrichtung nach Anspruch 1, dadurch gekennzeichnet, daß ein Stapel von Scheiben (29), welche mit gegenseitigen Abständen angeordnet und oberhalb der Platte (30) angebracht sind, vorgesehen ist, wobei die Mitten der Scheiben auf einer senkrecht zur Oberfläche jeder Scheibe verlaufenden Linie liegen und die Einleitungsmittel (25) zusätzlich zum Aufbringen der Flüssigkeit auf mindestens eine Fläche (31) jeder Scheibe dienen.

3. Vorrichtung nach Anspruch 1 oder 2, dadurch gekennzeichnet, daß Mittel zum Verändern des Abstandes zwischen dem Rand der Platte (30) und den Vereinigungsmitteln (39) vorgesehen sind, welche Mittel auswechselbare Hülsen mit verschiedenen Durchmessern aufweisen.

4. Vorrichtung nach einem der Ansprüche 1 bis 3, dadurch gekennzeichnet, daß in der Kammer (10) Mittel (42) zum Sammeln der von den Vereinigungsmitteln (39) kommenden Flüssigkeit, Mittel (48), welche mit den Sammelmitteln verbunden sind, um die gereinigte Flüssigkeit von der Kammer (10) abzuführen, und Mittel (47) angeordnet sind, welche mit der Kammer in Verbindung stehen, um die freigesetzte Verunreinigung aus der Vakuumkammer abzuziehen.

5. Vorrichtung nach einem der vorhergehenden Ansprüche, dadurch gekennzeichnet, daß die die Platte in Rotation versetzenden Mittel durch einen in der Kammer (10) angebrachten Hydraulikmotor (20) gebildet sind.

6. Vorrichtung nach Anspruch 5, dadurch gekennzeichnet, daß der Hydraulikmotor (20) in den Fließweg des verunreinigten Fluides vor den Einleitungsmitteln (25, 26) eingeschaltet ist.

7. Vorrichtung nach einem der Ansprüche 1 bis 6, dadurch gekennzeichnet, daß Mittel, um die Flüssigkeit durch die Vorrichtung zu treiben, vorgesehen sind, ein Vorfilter (64), welches mindestens einen Teil der Partikel aus der verunreinigten Flüssigkeit entfernt, vorgesehen ist, wobei die Vakuumkammer im Fließweg nach dem Filter (64) angeordnet ist und eine Innenfläche (39) aufweist, welche die Vereinigungsmittel bildet, daß Mittel (42) zum Sammeln der von der Vereinigungfläche (39) kommenden gereinigten Flüssigkeit vorgesehen sind, daß Mittel (41, 48) zum Abführen der gereinigten Flüssigkeit aus der Kammer (10) vorgesehen sind, und daß Absaugmittel (14, 47) vorgesehen sind, um die freigesetzte flüchtige Verunreinigung aus der Vakuumkammer (10) abzuziehen, welche ein vereinigendes Filter (74) in Verbindung mit den Absaugmitteln aufweisen.

8. Vorrichtung nach Anspruch 7, dadurch gekennzeichnet, daß die Abführmittel (41, 48) ein Schlußfilter (83) zum Entfernen weiterer Teilchen aufweisen.

9. Vorrichtung nach Anspruch 7 oder 8, dadurch gekennzeichnet, daß Mittel (6) zum Erwärmen des verunreinigten Fluides vorgesehen sind.

10. Verfahren zum Abtrennen einer Fraktion einer flüchtigen Verunreinigung von einer verunreinigten Flüssigkeit, welches Verfahren die Stufen einen zumindest teilweise evakuierten Raum (I) vorzusehen, eine in diesem Raum (I) angeordnete Platte (30) in Rotation zu versetzen und die verunreinigte Flüssigkeit auf die Oberfläche (31) der rotierenden Platte (30) einzuleiten, umfaßt, dadurch gekennzeichnet, daß die Rotationsgeschwindigkeit der Platte (30) hinreichend groß ist, um die verunreinigte Flüssigkeit, wenn sie den Umfang der Platte verläßt, in feine Tröpfchen (36) mit Durchmessern, welche um einen theoretischen Tröpfchendurchmesser von 40 μm oder weniger verteilt sind, entsprechend der Beziehung

$$d = \frac{K}{V(D\rho/T)^{1/2}}$$

aufzubrechen, in welcher Beziehung d der theoretische Tröpfchendurchmesser, V die Rotationsgeschwindigkeit der Platte, D der Plattendurchmesser, ρ die Dichte des Fluides, T die Oberflächenspannung des Fluides und K eine empirische Konstante ist, deren Wert annähernd gleich 0,075 ist, wenn alle Variablen in SI-Einheiten ausgedrückt sind, daß die feinen Tröpfchen an einer Fläche (30) vereint werden, welche im Raum (I) angeordnet ist, wobei der Rand der rotierenden Platte (30) in einem Abstand von der vereinigenden Fläche liegt, der hinreichend groß ist, um im Raum (I) eine Tröpfchenverweilzeit zu erhalten, welche es ermöglicht, daß die Fraktion der flüchtigen Verunreinigung von der verunreinigten Flüssigkeit bei der Wanderung jedes Tröpfchens zwischen dem Rand der rotierenden Platte und der vereinigenden Fläche abgetrennt wird, und daß die von der vereinigenden Fläche erhaltene Flüssigkeit gesammelt wird.

# EP 0 141 533 B1

**Revendications**

1. Dispositif pour séparer une fraction d'une souillure volatile à partir d'un liquide souillé, ce dispositif comprenant une chambre à vide (10), un plateau rotatif (30) présentant une surface continue et disposé à l'intérieur de la chambre à vide (10), un dispositif (25) permettant l'introduction du liquide sur une surface (31) du plateau, un dispositif (39) espacé du plateau pour assurer la coalescence du liquide purifié, le dispositif (25) prévu pour l'introduction du liquide souillé sur le plateau (30) servant à introduire le liquide sensiblement suivant l'axe de rotation du plateau, caractérisé en ce qu'il comprend en outre un dispositif (20) permettant de faire tourner le plateau (30) à une vitesse de rotation telle que le liquide est détaché de la périphérie du plateau rotatif sous la forme de fines gouttelettes ayant des diamètres répartis autour d'un diamètre théorique de gouttelette d'environ 40 micromètres ou moins, suivant la formule:

$$d = \frac{K}{V(D\rho/T)^{1/2}}$$

où d désigne le diamètre théorique des gouttelettes, V désigne la vitesse de rotation du plateau, D désigne le diamètre du plateau, ρ désigne la densité du fluide, T désigne la tension superficielle du fluide, et K est une constante empirique égale à environ 0,075 lorsque toutes les variables sont exprimées en unités SI, et la distance entre le bord périphérique du plateau et le dispositif de coalescence (39) assure une durée de séjour suffisante des gouttelettes dans l'espace intermédiaire pour permettre à la fraction de la souillure volatile de se séparer du liquide au fur et à mesure que chaque gouttelette se déplace entre le bord du plateau et le dispositif de coalescence.

2. Dispositif suivant la revendication 1, caractérisé par une pile de disques (29) espacés les uns des autres et montés au-dessus du plateau (30), les centres des disques se situant sur une ligne perpendiculaire à la surface de chaque disque, le dispositif d'introduction (25) servant en outre à déposer le liquide sur au moins une surface (31) de chaque disque.

3. Dispositif suivant la revendication 1 ou la revendication 2, caractérisé par le changement de la distance entre le bord du plateau (30) et le dispositif de coalescence (39), ces moyens comportant des manchons amovibles de divers diamètres.

4. Dispositif suivant l'une quelconque des revendications 1 à 3, caractérisé par un dispositif (42) disposé à l'intérieur de la chambre (10) pour récolter le liquide purifié depuis le dispositif de coalescence (39), un dispositif (48) communiquant avec le dispositif de récolte pour l'enlèvement du liquide purifié hors de la chambre (10), et un dispositif (47) communiquant avec la chambre pour aspirer la souillure libérée, hors de la chambre à vide.

5. Dispositif suivant l'une quelconque des revendications précédentes, caractérisé en ce que le dispositif faisant tourner le plateau est un moteur hydraulique (20) monté dans la chambre (10).

6. Dispositif suivant la revendication 5, caractérisé en ce que le moteur hydraulique (20) est relié à l'écoulement du fluide souillé, en amont du dispositif d'introduction (25, 26).

7. Dispositif suivant l'une quelconque des revendications 1 à 6, caractérisé en ce que des moyens sont prévus pour déplacer le liquide à travers le dispositif, un filtre initial (64) séparant au moins une partie des particules depuis le liquide souillé, la chambre à vide susdite étant localisée en aval du filtre (64) et comportant une surface interne (39) formant le dispositif de coalescence, un dispositif (42) étant prévu pour récolter le liquide purifié reçu de la surface de coalescence (39), des moyens (41, 48) étant prévus pour enlever le liquide purifié hors de la chambre (10) et des moyens d'échappement (14, 47) étant prévus pour évacuer la souillure volatile libérée hors de la chambre à vide (10) et comportant un filtre de coalescence (74) en communication avec les moyens d'échappement.

8. Dispositif suivant la revendication 7, caractérisé en ce que les moyens de séparation (41, 48) comportent un filtre final (43) pour l'enlèvement d'autres particules.

9. Dispositif suivant la revendication 7 ou la revendication 8, caractérisé par des moyens (6) pour chauffer le fluide souillé.

10. Procédé de séparation d'une fraction d'une souillure volatile au départ d'un liquide souillé, ce procédé comprenant la prévision d'un espace au moins partiellement mis sous vide (I), la rotation d'un plateau (30) disposé à l'intérieur de l'espace (I) et l'introduction du liquide souillé sur la surface (31) du plateau rotatif (30), caractérisé en ce que la vitesse de rotation du plateau (30) est suffisante pour dissocier le liquide souillé au fur et à mesure qu'il quitte la périphérie du plateau en formant de fines gouttelettes (36) présentant des diamètres répartis autour d'un diamètre théorique de gouttelette de 40 micromètres ou moins, suivant la formule:

$$d = \frac{K}{V(D\rho/T)^{1/2}}$$

où d désigne le diamètre théorique de gouttelette, V désigne la vitesse de rotation du plateau, D désigne le

8

diamètre du plateau, ρ désigne la densité du fluide, T désigne la tension superficielle du fluide, et K est une constante empirique égale à environ 0,075 lorsque toutes les variables ont été exprimées en unités SI, et la coalescence des fines gouttelettes contre une surface (30) disposée à l'intérieur de l'espace (I), le bord du plateau rotatif (30) étant espacé, par rapport à la surface de coalescence, d'une distance suffisante pour donner une durée de séjour de gouttelette à l'intérieur de l'espace (I), qui permet à la fraction de la souillure volatile d'être séparée du liquide souillé au fur et à mesure que chaque gouttelette se déplace entre le bord du plateau rotatif et la surface de coalescence, et la récolte du liquide purifié reçu depuis la surface de coalescence.

Fig. 1.

Fig. 2.

Fig. 3.

Fig. 4.